# EUROPEAN PATENT SPECIFICATION

(11) **EP 2 574 491 B1**
(45) Date of publication and mention of the grant of the patent: **26.12.2018**
(21) Application number: 11183467.7
(22) Date of filing: 30.09.2011
(51) Int. Cl.: B60K 37/00

(54) **Support device of an adjustable vehicular display integrated in the dashboard of a vehicle, in particular an industrial or commercial vehicle**
Haltevorrichtung eines einstellbaren Fahrzeugdisplays, das in das Armaturenbrett eines Fahrzeugs integriert ist, insbesondere eines Industrie- oder Nutzfahrzeugs
Dispositif de support d'un écran réglable intégré dans le tableau de bord d'un véhicule, en particulier un véhicule industriel ou commercial

(43) Date of publication of application: 03.04.2013
(73) Proprietor: Iveco S.p.A., 10156 Torino (IT)
(72) Inventor: Pugno, Enrico, 10153 Torino (IT); Guarino, Salvatore, 10044 Pianezza (IT)
(74) Representative: Franzolin, Luigi

(56) References cited:
- WO-A1-97/31803
- WO-A1-2004/061359
- US-A1- 2001 042 812

## Description

### Application field of the invention

This invention relates to the field of vehicle dashboards integrating an adjustable display, in particular of a commercial or an industrial vehicle. An example of supporting system for dashboard displays is given on WO2004/061359 A1, which discloses the preamble of claim 1.

### Description of the prior art

Larger and larger displays are used in the automotive field, both for providing information relating to the vehicle, such as failures or actuation of functionalities, and for on-board entertainment, but also as part of the navigation systems. Generally such displays, because of their dimensions, are best housed in the vehicle dashboard, in central position.

It is known that displays have, in general, a reduced viewing angle, thus the display should be able to turn towards the driver, in order to improve its usability.

Some displays may be particularly heavy, because they integrate processing means of a navigation system and/or an interface system to the functions and to the signalling systems of the vehicle.

Travelling on uneven grounds, vehicle acceleration and braking and engine vibrations, above all on industrial vehicles, may stress the support of the display and even damage it. Moreover it should be considered that the larger the display adjustment angle is the more fragile the display support is.

Moreover, for very low frequency vibrations, namely lower than 60 Hz, the different stiffness of the dashboard with respect to the human body, which besides rests on a padded seat, determines that the head of the driver and the display do not vibrate in the same way. The display, in fact, tends to oscillate far more than the head of the driver. Thus the latter is disturbed by annoying oscillations of the display.

### Summary of the invention

Therefore an aim of the present invention is to provide a support device of an adjustable vehicular display integrated in a vehicle dashboard, in particular industrial or commercial, which has a good strength in relation to a remarkable adjustment angle of the display.

Another aim of the present invention is to improve the usage comfort of a vehicular display.

It is object of the present invention a support device of an adjustable vehicular display integrated in a vehicle dashboard, in particular industrial or commercial; the display being integrated in the dashboard in a substantially central position; the display having a substantially flat development and comprising two opposite sides, a first of said sides being near to the driver's seat of the vehicle; the support device comprising a hinge connecting said first side to the dashboard and defining an axis of rotation parallel to said first side and comprising a sled sliding system connecting a second side, opposite to the first side, to the dashboard; the sled sliding system being suitable to limit a rotation of the display around said hinge and to cooperate with the hinge in supporting the display.

The support system holds the display in two different points, each one of them located in correspondence to one of the sides of the display. Advantageously, this results in a higher stability of the display and in a higher strength of the support device.

The hinge and/or the sled sliding system preferably comprise vibration damping means.

The sled sliding system comprises a grooved plate having a through groove and a support plate suitable to engage said through groove.

Preferably said grooved plate lies on a lying plane perpendicular to the axis of rotation of the hinge and the grooved plate is engaged by said support plate in at least two distinct and not aligned points on the lying plane, with an intersection point between the lying plane and the axis of rotation.

This advantageously determines that the display is supported in three different points arranged in order to ensure an higher stability of the display, also according to the longitudinal direction of the vehicle.

The through groove has preferably a curved shape that approximates a portion of circumference whose center is identified by the axis of rotation of the hinge in the lying plane of the grooved plate.

It is also object of the present invention a ground vehicle comprising a dashboard, a display integrated in the dashboard in a substantially central position and the aforementioned support device.

The claims are an integral part of the present description.

### Brief description of the Figures

Further purposes and advantages of the present invention will become clear from the following detailed description of a preferred embodiment (and its alternative embodiments) and the drawings that are attached hereto, which are merely illustrative and non-limitative, in which:
figures 1 and 2 show a vehicle dashboard integrating a vehicle display, the figures show different positions of the display which in figure 2 is oriented more towards the left, assuming that the vehicle has a left-hand drive;
figure 3 shows a rear view of an upper part of the vehicle dashboard of the previous figures, namely according to a view oriented to a direction opposite to the travelling direction of the vehicle;
figure 4 shows a front view of a portion of the aforementioned vehicle dashboard, showing some components of the support system;
figure 5 shows a top view of the aforementioned vehicle dashboard integrating a display; the dashboard is shown in transparency by thin lines, while some components of the support system are shown by thick lines;
figure 6 shows an exploded view of a first set of components of the support system;
figure 7 shows an exploded view of a second set of components of the support system;
figure 8 shows an axonometric exploded view of the part of the dashboard of figure 3.

In the figures the same reference numbers and letters identify the same elements or components.

### Detailed description of preferred embodiments of the invention

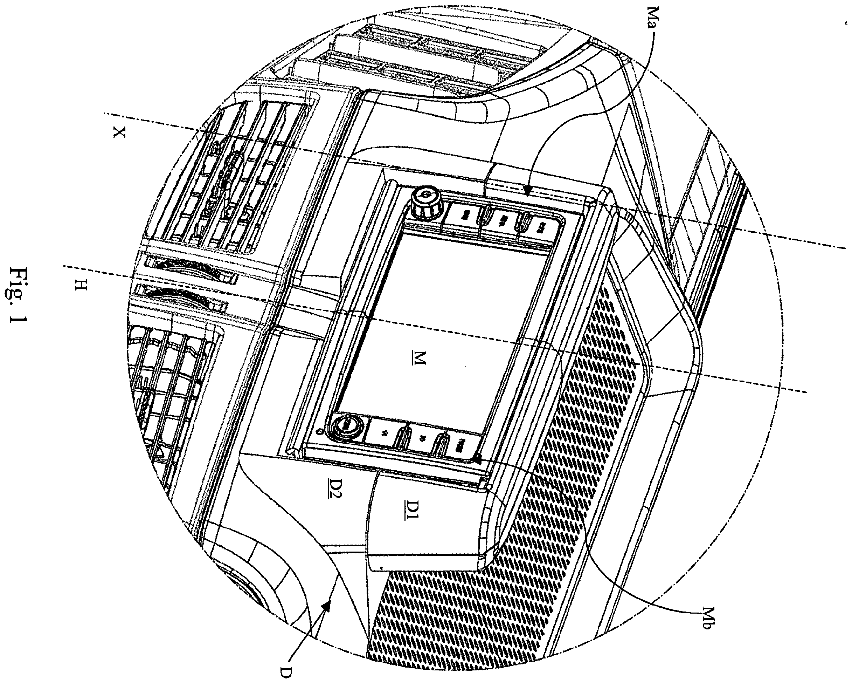

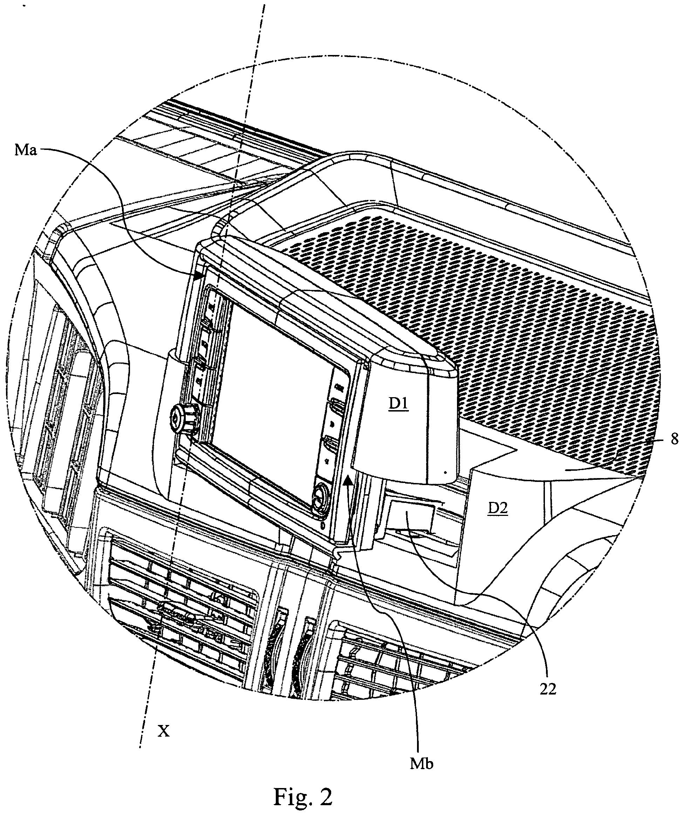

With reference to figures 1 and 2, the display M is integrated in the vehicle dashboard D which, in the example shown in the figures, comprises an upper part D1 and a lower part D2. The upper part D1 projects upwards with respect to the remaining dashboard D.

From figure 2, it is possible to observe that the upper part D1 of the dashboard is integral and moves with the display M. This, obviously, increases the weight of the mobile part with respect to the dashboard that is fixed. According to another alternative embodiment, not shown, the upper part of the dashboard is integral with its the lower part, which is fixed to the vehicle. According to such alternative embodiment, the display is the only part able to move.

Figure 1 shows the display M in a retracted position and figure 2 shows the display M in an advanced position, namely oriented towards the vehicle driver's seat.

The display M may have any shape. In the example it has a flat shape, approximately rectangular, comprising two substantially vertical opposite sides, Ma and Mb. The side near the driver's seat, for example the left side Ma, is connected to the dashboard D by means of a hinge 1 having an axis of rotation X parallel to the left side Ma. This allows the display M to be oriented towards the driver with respect to the dashboard D.

The concept of near or of far side with respect to the driver's seat is clear and not vague, also in relation to the figures, and does not need further explanations.

The right side Mb is connected to the dashboard D by means of a sled sliding system 2.

Such sled sliding system 2 comprises a grooved plate 22 having a through groove 22a, which lies on a lying plane P perpendicular to the axis of rotation X of the hinge 1. Such groove is curved in order to define a portion of circumference whose center is in the fulcrum defined by the axis X of the hinge 1, namely by the intersection of X with the lying plane P.

Such grooved plate 22 is preferably integral with the display M.

A support plate 21, supporting the grooved plate 22, is firmly connected to the dashboard D, more precisely to its lower part D1.

It is evident that the grooved plate may be connected to the dashboard and that the support plate may be connected to the display.

The support plate 21 engages at least partially the groove 22a of the grooved plate 22, in order to support the right side Mb of the display M and to limit the rotation of the display M around the hinge 1.

The orientation angle between the retracted and the advanced position is comprised between 15° and 30° with an optimal value of 20°-22°.

According to another aspect of the invention, the support plate 21 engages the groove 22a preferably by means of at least two cylindrical elements, 23a and 23b, which project from the support plate 21 in a parallel way with respect to the axis of rotation X. According to a section transversal to such cylindrical elements, they are aligned and parallel to a straight line tangent to the groove 22a.

Thus they define two engagement points between the grooved plate 22 and the support plate 21. Such points are not aligned in the plane P with the point defined by the intersection of the axis of rotation X with the lying plane P.

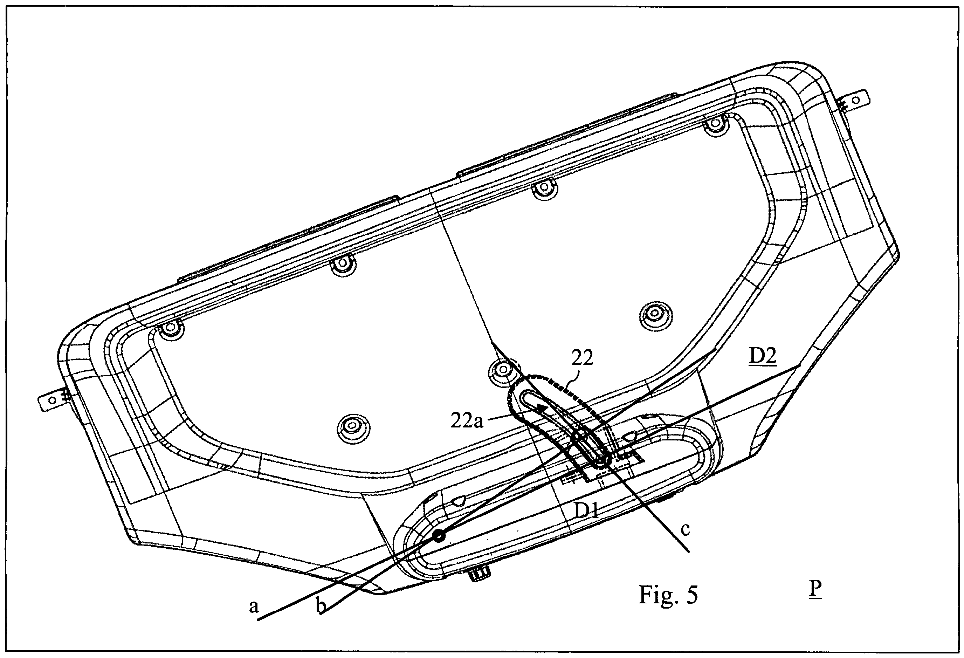

The display M is thus supported in three not aligned points in the lying plane (horizontal) P, determining a higher stability of the support. Such points are thus defined by the hinge and by the pair of cylindrical elements 23a and 23b. The triangulation of the support is shown in figure 5 by the half lines a, b and c.

It is evident that by further spacing out the cylindrical elements 23a and 23b the stability of the display increases.

Such solution is optimal above all for particularly large and heavy displays, in order to compensate the oscillations of the display that are concordant with the longitudinal axis of the vehicle, namely during vehicle acceleration and braking. According to a further aspect of the invention, the display M is supported by springs 3, 4 and 5 which damp the vibrations. As an alternative it is possible to use inserts of resilient material.

A first spring 3 is placed between
- at least a ring of the fixed part 12 of the hinge 1, intended to be fixed to the dashboard D and
- at least a ring of the mobile part 11 of the hinge 1, intended to be fixed to the display M.

When in use, the spring 3 is wound around the latch 13 of the hinge 1 which constrains the fixed part 12 together with the mobile part 11.

In other words, the spring 3, which is preferably helical, allows a reciprocal damped sliding along the axis X between the fixed part 12 and the mobile part 11 of the hinge 1. Another spring 4 and/or 5 is provided for each one of the cylindrical elements 23a and 23b of the support plate 21.

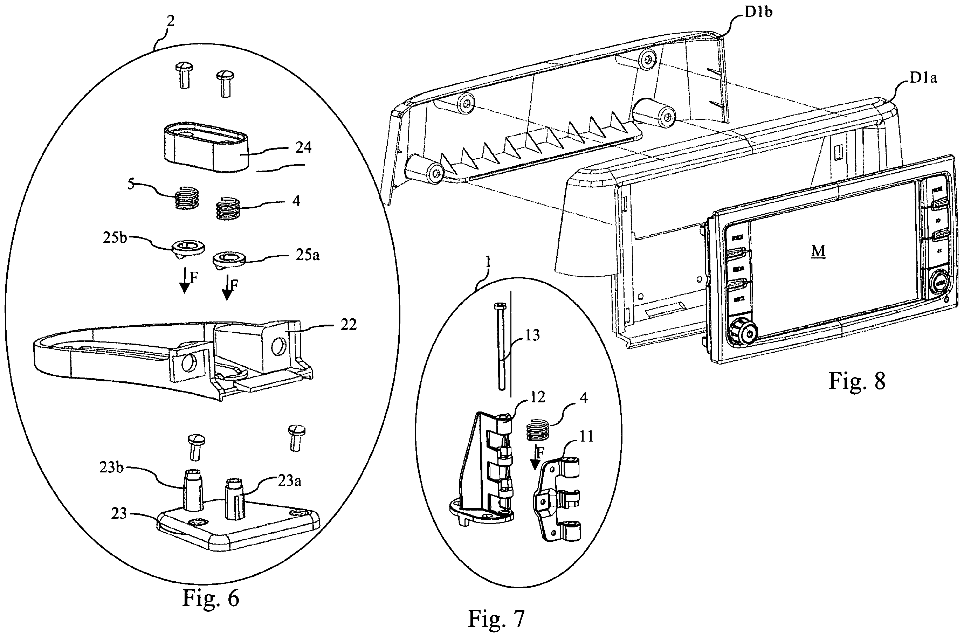

In particular, with reference to figure 7, springs 4 and 5 are connected to the free ends of the cylindrical elements 23a and 23b by means of screws or, optionally, by means of a spacing element 24.

Springs 4 and 5 exert a force F which pushes the grooved plate 22 against the support plate 21.

The hinges are placed between the fixed portion 12 and 21 of the support system and the mobile portion 11 and 22 of the support system in order to damp upward driving forces, namely having a direction opposite to the direction F, deriving both from the road and from the vehicle engine stresses.

It can be noted that the direction F is parallel to the axis of rotation X of the hinge.

According to an alternative embodiment not shown, such damping means are interposed, in order to damp a downward driving force, namely accordingly with F.

According to a further alternative embodiment, not shown, the damping elements are suitable to damp any vertical driving force.

Spring functioning and calibration has to be considered with respect to the fact that the support system defines three not aligned support points on plane P. The three support points are able to damp not only vertical stresses, but also stressed having any direction.

Springs 4 and 5 preferably exert their thrust against the grooved plate 22 by means of respective cams 25a and 25b. These cams are substantially washers having a crest according to a diameter of the washer.

The grooved plate 22 comprises a raised flat band which borders the groove 22a and comprises seats for accommodating the crest of the cams 25a and 25b. Thus the friction between the grooved plate 22 and the support plate 21 varies according to their reciprocal position. This allows advantageously to stop the display in a position preferred by the driver, preventing the display from moving in relation to vehicle acceleration or braking.

According to the alternative embodiment shown in the figures, the display M is integral with the upper part D1 of the dashboard which comprises, according to figure 7:
- a frame D1a surrounding the borders of the display M and covering the rear part of the display M, the grooved plate 22 being preferably connected to such frame, and
- a body D1b intended to be connected, by means of screws or joints, to the frame D1a, covering an upper portion of the latter and hiding the hinge 1.

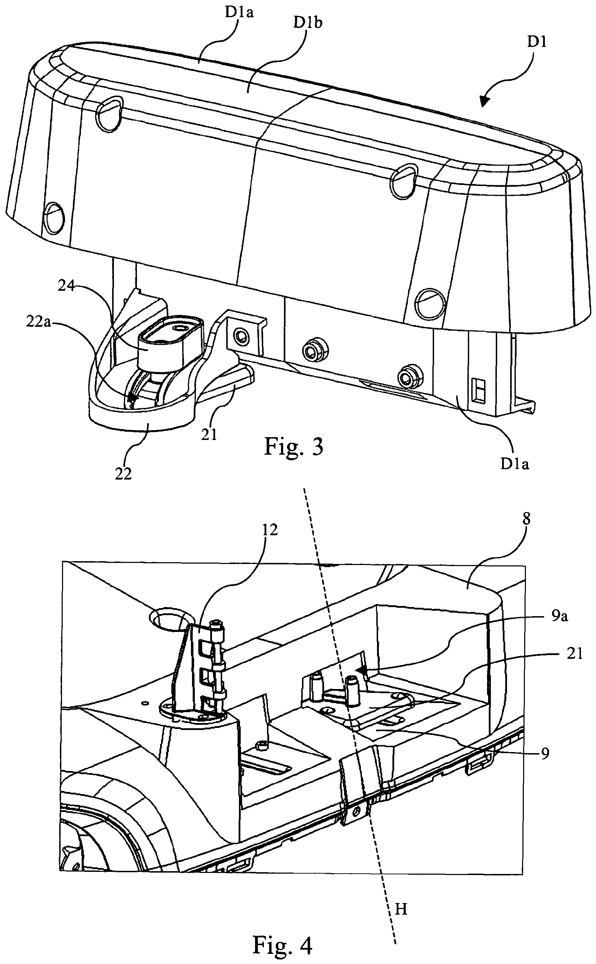

With particular reference to figure 4, the lower part D2 of the dashboard comprises a recess 7 complementary with the remaining portion of the frame D1a that is not covered by the body D1b.

The upper part of the recess 7 is delimited by a substantially flat and horizontal U-shaped surface 8. Both the recess 7 and the U-shaped surface 8 are symmetrical with respect to a medial axis H, parallel to X, in order to allow the display to be mounted both on right-hand and on left-hand drive vehicles.

The fixed part 12 of the hinge 1 is housed on said U-shaped surface, on the left side if the vehicle has a left-hand side configuration and vice versa.

The recess 7 comprises at least a seat 9 of the support plate 21.

Such seat 9 comprises an opening 9a suitable to accommodate at least a part of the grooved plate 22 when the display M is in retracted position.

Another seat, similar to the seat 9, may be provided symmetrically with respect to the aforementioned medial axis H for the left-hand drive vehicles.

It will be apparent to the person skilled in the art that other alternative and equivalent embodiments of the invention can be conceived and reduced to practice without departing from the scope of the invention.

## Claims

1. Support device with an adjustable vehicular display (M) in particular an industrial or commercial vehicle; the display (M) having a flat development and comprising two opposite sides (Ma, Mb), a first (Ma) of said sides being the nearest side to the driver's seat; the support device is **characterised in that**:
- the display (M) is integrated in the dashboard in a central position, and **in that** it further comprises
- a hinge (1) connecting said first side (Ma) to the dashboard (D) and defining an axis of rotation (X) parallel to said first side (Ma), and
- a sled sliding system (2) connecting a second side (Mb) to the dashboard (D), opposite to said first side (Ma); the sled sliding system being suitable to limit a rotation of the display (M) around said hinge (1) and to cooperate with the hinge (1) in supporting the display (M).

2. Support device according to claim 1, wherein said hinge (1) and/or said sled sliding system (2) preferably comprise vibration damping means (3,4,5).

3. Support device according to one of the previous claims, wherein said sled sliding system (2) comprises a grooved plate (22) having a through groove (22a) and a support plate (21) suitable to engage said through groove (22a).

4. Support device according to claim 3, wherein said grooved plate (22) lies on a lying plane (P) perpendicular to said axis of rotation (X) and wherein said grooved plate (22) is engaged by said support plate (21) in at least two distinct and not aligned points on the lying plane (P), with a point defined by an intersection between the lying plane (P) and the axis of rotation (X).

5. Support device according to claim 4, wherein said through groove (22a) has a curved shape approximating to a portion of circumference whose center is identified in said intersection.

6. Support device according to claim 4, wherein said at least two points are identified by respective cylindrical elements (23a,23b) projecting from said support plate (21).

7. Support device according to claim 6, wherein a free end of each one of said cylindrical elements (23a,23b) comprises second damping means (4,5) suitable to damp a driving force (F) parallel to said axis of rotation (X).

8. Support device according to claim 2, wherein said hinge (1) comprises a fixed part (12) suitable to be firmly fixed to the dashboard (D) and a mobile part suitable to be firmly fixed to the display (M) and first damping means (3) placed between said fixed part (12) and said mobile part (11) in order to damp a driving force (F) parallel to said axis of rotation (X).

9. Support device according to one of the claims from 3 to 8, wherein said grooved plate (22) is connected to the display (M) and said support plate (21) is connected to the dashboard (D).

10. Support device according to one of the previous claims, wherein said sled sliding system (2) comprises friction means (25a, 25b) suitable to keep the display firmly in the desired position.

11. Support device according to one of the previous claims, wherein said display (M) integrates or is connected to a vehicular navigation system.

12. Ground vehicle comprising a dashboard (D) and a display (M) integrated in the dashboard (D) in a substantially central position and a support device of the display (M) according to any of the previous claims.

## Patentansprüche

1. Haltevorrichtung mit einem einstellbaren Fahrzeugdisplay (M), insbesondere in einem Industrie- oder Nutzfahrzeug; wobei das Display (M) eine flache Erstreckung aufweist und zwei gegenüberliegende Seiten (Ma, Mb) umfasst, wobei eine erste (Ma) der Seiten die dem Fahrersitz nächste Seite ist; wobei die Haltevorrichtung **dadurch gekennzeichnet ist, dass**
- das Display (M) in einer zentralen Position in das Armaturenbrett integriert ist und dass es weiter folgendes umfasst:
- ein Scharnier (1), welches die erste Seite (Ma) mit dem Armaturenbrett (D) verbindet und eine Rotationsachse (X) definiert, die parallel zu der ersten Seite (Ma) verläuft, und
- ein Schlittengleitsystem (2), welches eine zweite Seite (Mb) mit dem Armaturenbrett (D) verbindet, gegenüberliegend zu der ersten Seite (Ma); wobei das Schlittengleitsystem geeignet ist, die Rotation des Displays (M) um das Gelenk zu beschränken und mit dem Scharnier (1) zusammenzuwirken, um das Displays (M) zu halten.

2. Haltevorrichtung gemäß Anspruch 1, **dadurch gekennzeichnet, dass** das Scharnier (1) und/oder das Schlittengleitsystem vorzugsweise Mittel zur Vibrationsdämpfung (3, 4, 5) umfassen.

3. Haltevorrichtung gemäß einem der vorhergehenden Ansprüche, **dadurch gekennzeichnet, dass** das Schlittengleitsystem (2) eine Platte mit Nut (22) umfasst, welche eine durchlaufende Nut (22a) und eine Halteplatte (21) aufweist, die geeignet ist, in die durchlaufende Nut (22a) einzugreifen.

4. Haltevorrichtung gemäß Anspruch 3, **dadurch gekennzeichnet, dass** die Platte mit Nut (22) in einer liegenden Ebene (P) liegt, die senkrecht zu der Rotationsachse (X) ist und wobei die Platte mit Nut (22) an die Halteplatte (21) an wenigstens zwei verschiedenen und nicht aufeinander ausgerichteten Punkten auf der liegenden Ebene (P) gekoppelt ist, wobei ein Punkt definiert ist als der Schnittpunkt von der liegenden Ebene (P) und der Rotationsachse (X).

5. Haltevorrichtung gemäß Anspruch 4, wobei die durchlaufende Nut (22a) eine gekrümmte Form aufweist, die näherungsweise einen Kreisumfangabschnitt darstellt, dessen Mittelpunkt identisch mit dem Schnittpunkt ist.

6. Haltevorrichtung gemäß Anspruch 4, wobei die wenigstens zwei Punkte durch entsprechende zylindrische Elemente (23a, 23b), die von der Halteplatte (21) hervorstehen, bestimmt werden.

7. Haltevorrichtung gemäß Anspruch 6, **dadurch gekennzeichnet, dass** ein freies Ende von jedem der zylindrischen Elemente (23a, 23b) zweite dämpfende Mittel (4, 5) umfasst, geeignet zum Dämpfen einer parallel zur Rotationsachse (X) wirkenden Antriebskraft (F).

8. Haltevorrichtung gemäß Anspruch 2, wobei das Scharnier (1) einen fixierten Teil (12) umfasst, der geeignet ist, fest am Armaturenbrett (D) fixiert zu werden, und einen beweglichen Teil, der geeignet ist, fest an dem Display (M) fixiert zu werden, und erste dämpfende Mittel (3), die zwischen dem fixierten Teil (12) und dem beweglichen Teil (11) angeordnet sind zum Dämpfen einer Antriebskraft (F), die parallel zu der Rotationsachse wirkt.

9. Haltevorrichtung gemäß einem der Ansprüche 3 bis 8, wobei die Platte mit Nut (22) mit dem Display (M) verbunden ist und die Halteplatte (21) mit dem Armaturenbrett (D) verbunden ist.

10. Haltevorrichtung gemäß einem der vorhergehenden Anspruch, **dadurch gekennzeichnet, dass** das Schlittengleitsystem (2) Reibungsmittel (25a, 25b) umfasst, geeignet, das Display fest in der gewünschten Position zu halten.

11. Haltevorrichtung gemäß einem der vorhergehenden Ansprüche, **dadurch gekennzeichnet, dass** in dem Display (M) ein Fahrzeugnavigationssystem integriert ist oder das Display (M) mit einem solchen verbunden ist.

12. Bodenfahrzeug, umfassend ein Armaturenbrett (D) und ein Display (M), welches in das Armaturenbrett (D) integriert ist in einer im wesentlichen zentralen Position und einer Haltevorrichtung für das Display (M) gemäß einem der vorhergehenden Ansprüche.

## Revendications

1. Dispositif de support avec un écran de véhicule réglable (M), en particulier un véhicule industriel ou commercial ;
l'écran (M) ayant un développement plat et comprenant deux côtés opposés (Ma, Mb), un premier (Ma) desdits côtés étant le côté le plus proche du siège du conducteur ;
le dispositif de support est **caractérisé en ce que** :
- l'écran (M) est intégré dans le tableau de bord dans une position centrale, et **en ce qu'**il comprend en outre
- une charnière (1) reliant ledit premier côté (Ma) au tableau de bord (D) et définissant un axe de rotation (X) parallèle audit premier côté (Ma), et
- un système coulissant à traîneau (2) reliant un second côté (Mb) au tableau de bord (D), opposé audit premier côté (Ma) ; le système coulissant à traîneau étant approprié pour limiter une rotation de l'écran (M) autour de ladite charnière (1) et pour coopérer avec la charnière (1) pour supporter l'écran (M).

2. Dispositif de support selon la revendication 1, dans lequel ladite charnière (1) et/ou ledit système coulissant à traîneau (2) comprennent de préférence un moyen d'amortissement des vibrations (3, 4, 5).

3. Dispositif de support selon l'une quelconque des revendications précédentes, dans lequel ledit système coulissant à traîneau (2) comprend une plaque rainurée (22) ayant une rainure traversante (22a) et une plaque de support (21) appropriée pour venir en prise avec ladite rainure traversante (22a).

4. Dispositif de support selon la revendication 3, dans lequel ladite plaque rainurée (22) repose sur un plan de repos (P) perpendiculaire audit axe de rotation (X) et dans lequel ladite plaque rainurée (22) vient en prise avec ladite plaque de support (21) en au moins deux points distincts et non alignés sur le plan de repos (P), avec un point défini par une intersection entre le plan de repos (P) et l'axe de rotation (X).

5. Dispositif de support selon la revendication 4, dans lequel ladite rainure traversante (22a) a une forme incurvée s'approchant d'une partie de la circonférence dont le centre est identifié dans ladite intersection.

6. Dispositif de support selon la revendication 4, dans lequel lesdits au moins deux points sont identifiés par des éléments cylindriques respectifs (23a, 23b) faisant saillie à partir de ladite plaque de support (21) .

7. Dispositif de support selon la revendication 6, dans lequel une extrémité libre de chacun desdits éléments cylindriques (23a, 23b) comprend un second moyen d'amortissement (4, 5) approprié pour amortir une force d'entraînement (F) parallèle audit axe de rotation (X).

8. Dispositif de support selon la revendication 2, dans lequel ladite charnière (1) comprend une pièce fixe (12) appropriée pour être fermement fixée au tableau de bord (D) et une pièce mobile appropriée pour être fermement fixée à l'écran (M) et un premier moyen d'amortissement (3) placé entre ladite pièce fixe (12) et ladite pièce mobile (11) afin d'amortir une force d'entraînement (F) parallèle audit axe de rotation (X).

9. Dispositif de support selon l'une quelconque des revendications 3 à 8, dans lequel ladite plaque rainurée (22) est reliée à l'écran (M) et ladite plaque de support (21) est reliée au tableau de bord (D).

10. Dispositif de support selon l'une quelconque des revendications précédentes, dans lequel ledit système coulissant à traîneau (2) comprend un moyen de frottement (25a, 25b) approprié pour maintenir l'écran fermement dans la position souhaitée.

11. Dispositif de support selon l'une quelconque des revendications précédentes, dans lequel ledit écran (M) intègre un système de navigation de véhicule ou est relié à celui-ci.

12. Véhicule terrestre comprenant un tableau de bord (D) et un écran (M) intégré dans le tableau de bord (D) dans une position sensiblement centrale et un dispositif de support de l'écran (M) selon l'une quelconque des revendications précédentes.
